(19) **Europäisches Patentamt**
**European Patent Office**
**Office européen des brevets**

(11) **EP 1 985 345 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(51) Int Cl.:
**A63G 25/00** *(2006.01)*

(21) Anmeldenummer: **07008634.3**

(22) Anmeldetag: **27.04.2007**

(54) **Verfahren und Vorrichtung zur Geschwindigkeitsbestimmung an Fahrgeschäften**

Method and device for determining the velocity of rides

Procédé et dispositif destinés à la détermination de la vitesse de manèges

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**29.10.2008 Patentblatt 2008/44**

(73) Patentinhaber: **ZIERER Karussell- und Spezialmaschinenbau GmbH**
**94560 Offenberg (DE)**

(72) Erfinder:
• **Köckeis, Rupert**
**94513 Schönberg (DE)**

• **Murr, Hans-Peter**
**94560 Offenberg (DE)**

(74) Vertreter: **Eisenführ, Speiser & Partner**
**Patentanwälte Rechtsanwälte**
**Zippelhaus 5**
**20457 Hamburg (DE)**

(56) Entgegenhaltungen:
**WO-A-93/17344     DE-A1- 3 433 149**
**US-A- 4 991 514**

**Beschreibung**

Die Erfindung betrifft ein Verfahren zum Messen der Geschwindigkeit von Fahrzeugen, insbesondere Fahrzeugen eines Fahrgeschäfts. Die Erfindung betrifft weiterhin eine Vorrichtung zum Messen der Geschwindigkeit von Fahrzeugen eines Fahrgeschäfts.

Grundsätzlich werden Verfahren und Vorrichtungen zur Bestimmung der Geschwindigkeit von Fahrzeugen in einer Vielzahl von Anwendungen genutzt. Ein spezifisches Anwendungsgebiet solcher Verfahren und Vorrichtungen liegt beispielsweise in der Geschwindigkeitsmessung bei Fahrzeugen von Fahrgeschäften, wie beispielsweise Achterbahnen oder dergleichen. Bei dieser Anwendung dient die Geschwindigkeitsmessung dazu, die Sicherheit des Fahrgeschäfts zu gewährleisten, da innere Einflüsse, wie beispielsweise Ausfall oder Fehlfunktionen von Antriebs- oder Bremsvorrichtungen, oder äußere Einflüsse, wie beispielsweise Fehlbedienungen der Fahrgeschäftssteuerung, Veränderungen am Gleisweg, Umwelteinflüsse oder insbesondere Beladungseinflüsse am Fahrzeug zu einer Überschreitung oder einer Unterschreitung einer Maximal- oder Sollgeschwindigkeit führen können. Solche Geschwindigkeitsabweichungen können einerseits dazu führen, dass Kollisionen auftreten und andererseits die sichere Führung des Fahrzeugs entlang des Gleiswegs gefährden.

Regelmäßig wird daher bei Fahrgeschäften die Geschwindigkeit jedes einzelnen Fahrzeugs durch eine Geschwindigkeitsmessvorrichtung erfasst, um solche Gefahrzustände zu vermeiden und bei Erfassung einer Abweichung von/Überschreitung der Soll-/Maximalgeschwindigkeit entweder entsprechende Regelungsvorgänge zu veranlassen, um die Geschwindigkeit auf das gewünschte Maß zu bringen oder einen Nothalt des Fahrzeugs/der Fahrzeuge zu veranlassen, um die Gefahrsituation zu beseitigen.

Aus folgenden Dokumenten sind diverse Geschwindigkeitsmessvorrichtungen bekannt: WO93/17344 offenbart einen Drehzahlmesser und eine Auswerteeinheit, DE3433149 beschreibt ein Verfahren und eine Vorrichtung zur Pollageerfassung bei einem synchronen Langstatormotor, US4991514 beschreibt eine Fahrgeschäft mit in der Reihe befestigten Linearstatoren und elektronischen Geschwindigkeitsmessvorrichtung

Im Stand der Technik ist es einerseits bekannt, für eine solche Geschwindigkeitsmessung die Zeit zu erfassen, die das Fahrzeug für eine bestimmte Strecke benötigt, beispielsweise mittels einer Zeitmessvorrichtung, die durch zwei entlang der Fahrstrecke angeordnete Lichtschranken ausgelöst und gestoppt wird. Hierdurch wird zwar für die Messstrecke eine Geschwindigkeitserfassung mit in der Regel ausreichender Genauigkeit erzielt, das System weist jedoch einige für die Praxis bedeutsame Nachteile auf. So ist die Messung einerseits empfindlich gegenüber Fehlauslösungen der Messsensoren, die beispielsweise durch andere Objekte, welche die Lichtschranke oder andere Art von Sensoren auslösen, auftreten können. Zudem kann mit dem System nur unter erheblichem konstruktiven Aufwand eine Geschwindigkeitsüberwachung über größere Messbereiche mit ausreichender inkrementaler Auflösung in einzelne Messstrecken erfolgen, da für diesen Anwendungsfall eine Vielzahl von Sensoren entlang des Messbereichs montiert und justiert werden müssen. Schließlich besteht ein Nachteil dieses Systems darin, dass stets nur eine über die Messstrecke gemittelte Geschwindigkeit detektiert werden kann, wodurch etwaige sicherheitsgefährdende Geschwindigkeitsspitzen innerhalb dieser Messstrecke nicht erfasst werden können.

Um insbesondere den letzten Nachteil bekannter Systeme zu vermeiden, sind ebenfalls Systeme entwickelt worden, bei denen ein stationärer Drehgeber im Moment der Vorbeifahrt eines Fahrzeugs durch Reibschluss mit dem Fahrzeug in Drehung versetzt wird und aus dem Drehsensorsignal die Geschwindigkeit des Fahrzeugs ermittelt wird. Zwar kann mit diesem Verfahren eine lokale Geschwindigkeitserfassung mit guter Ortsauflösung theoretisch erreicht werden, jedoch wird auch mit diesem System das Problem einer Überwachung der Geschwindigkeit des Fahrzeugs entlang größerer Bereiche der Fahrstrecke oder gar entlang der gesamten Fahrstrecke nicht gelöst. Zudem wird durch den einerseits unvermeidbaren Schlupf und äußere Einflüsse wie Verschleiß des Reibrads mit daraus folgender Radiusverringerung oder Änderung der Reibzahl durch Verschmutzung oder Nässe die Messgenauigkeit des Systems erheblich beeinträchtigt, wodurch es sich nur eingeschränkt und gegebenenfalls unter erheblichem Zusatzaufwand für eine sicherheitsrelevante Geschwindigkeitsmessung eignet.

In kinematischer Umkehr des zuvor erläuterten Prinzips ist es auch bekannt, den Drehsensor mit Reibrad am Fahrzeug zu installieren und gegen eine Reibfläche entlang der Fahrstrecke abrollen zu lassen. Hiermit wird zwar eine kontinuierliche Messung entlang des gesamten Fahrwegs grundsätzlich ermöglicht, die prinzipiellen Probleme, die beispielsweise durch Verschleiß des Reibrads und Veränderung der Reibzahl, wie zuvor erläutert, auftreten, werden jedoch auch mit dieser Messanordnung nicht überwunden. Zudem weist das solcherart konstruierte System den Nachteil auf, dass die Messdaten originär im Fahrzeug gewonnen werden, was einerseits eine Stromversorgung im Fahrzeug selbst erfordert und andererseits zur Überwachung und Regelungseinwirkung eine Übertragung der Messdaten an eine zentrale Geschwindigkeitssteuerung erforderlich macht, wodurch eine zusätzliche Fehlerquelle in der sicherheitsrelevanten Überwachungskette auftritt.

Der Erfindung liegt die Aufgabe zugrunde, ein Messverfahren und eine Messvorrichtung bereitzustellen, welche in zuverlässigerer Weise als die bekannten Messvorrichtungen die Geschwindigkeit eines Fahrzeugs erfassen kann.

Diese Aufgabe wird gemäß eines ersten Aspekts der Erfindung durch ein Verfahren der eingangs genannten Art gelöst, mit den Schritten: Bereitstellen einer Vielzahl von entlang zumindest eines Abschnitts der Fahrstrecke des Fahrzeugs in Reihe befestigten Linearstatoren, Bereitstellen eines am Fahrzeug befestigten Magneten solcherart, dass er bei Bewegen des Fahrzeugs entlang des Abschnitts der Fahrstrecke mit den Linearstatoren zusammenwirkt, elektrisches Koppeln der einzelnen Linearstatoren mit der Statorwicklung eines Messmotors, wie eines Drehsynchronmotors, Antreiben eines Drehsensors mit dem Messmotor, Erzeugen eines zur Drehgeschwindigkeit des Drehsensors korrelierenden Drehsensorsignals und Ermitteln der Geschwindigkeit des Fahrzeugs aus dem Drehsensorsignal in einer Auswerteeinheit.

Das erfindungsgemäße Messverfahren erreicht somit einerseits eine berührungslose Erfassung der Fahrgeschwindigkeit des Fahrzeugs durch die Zusammenwirkung zwischen dem am Fahrzeug befestigten Magneten und den entlang der Fahrstrecke angeordneten Linearstatoren. Diese berührungslose Erfassung ist zudem vollkommen unempfindlich gegenüber Umwelteinflüssen, wodurch die Sicherheit des erfindungsgemäßen Verfahrens gegenüber Umwelteinflüssen erheblich verbessert wird.

Die Geschwindigkeitserfassung über die Zusammenwirkung zwischen dem Magneten und den Linearstatoren ist schlupffrei, wodurch eine hohe Genauigkeit des Messverfahrens ermöglicht wird. Erfindungsgemäß werden die Linearstatoren entlang der Fahrstrecke mit der Statorwicklung in einem Messmotor elektrisch gekoppelt. Diese elektrische Kopplung kann in einfachster Weise durch elektrische Leitungen erfolgen.

Der Drehsensor ist mit der Rotorwelle des Messmotors unmittelbar gekoppelt. Durch diese Ausgestaltung ermöglicht das erfindungsgemäße Verfahren eine hohe Auflösung, da im Drehsensor eine unabhängig von der Anzahl der Linearstatoren entlang des Fahrwegs und der Statoren im Messbereich wählbare Anzahl von Winkelinkrementen aufgelöst werden kann, wodurch das Messverfahren eine sehr hohe Auflösung der Geschwindigkeit ermöglicht.

Die Ermittlung der Geschwindigkeit des Fahrzeugs aus dem Drehsensorsignal in der Auswerteeinheit ist dabei unter Berücksichtigung der hierfür einflussnehmenden geometrischen Daten der jeweils gewählten Messanordnung vorzunehmen. Hier sind insbesondere der Abstand der einzelnen Statorwicklungen, also die Teilung des Linearstators, zu berücksichtigen, die Polpaare des Messmotors, und die Frequenz des speisenden Netzes.

Mit dem erfindungsgemäßen Messverfahren wird ein von Umwelteinflüssen praktisch unbeeinträchtigtes Messverfahren bereitgestellt, welches eine zuverlässige und dauerhafte sowie präzise Geschwindigkeitsbestimmung an Fahrzeugen ermöglicht. Werden die Linearstatoren entlang eines größeren Bereichs der Fahrstrecke oder der gesamten Fahrstrecke angeordnet, so kann die Geschwindigkeit mit hoher Ortsauflösung entlang der entsprechenden Fahrstrecke bzw. des gesamten Fahrbereichs des Fahrzeugs ermittelt werden.

Das erfindungsgemäße Verfahren eignet sich dabei einerseits dazu, die Geschwindigkeit des Fahrzeugs passiv zu ermitteln, indem der im Linearstator durch den vorbeifahrenden Magneten induzierte Strom zum Antrieb des Messmotors genutzt wird, um auf diese Weise eine antriebsentkoppelte Messung zu erzielen. Andererseits eignet sich das erfindungsgemäße Messverfahren insbesondere dann, wenn für den Antrieb des Fahrzeugs ein Linearmotor eingesetzt wird. In diesem Fall können die Linearstatoren des Linearmotors für das erfindungsgemäße Messverfahren eingesetzt werden und folglich unmittelbar in der Antriebseinheit die Verschaltung des Messmotors mit den Versorgungsleitungen dieser Linearstatoren erfolgen. Die Messung erfolgt dann direkt aus dem Antriebsmotor für das Fahrzeug und ist aufgrund der Schlupffreiheit solcher Linearantriebe hochpräzise und zugleich mit geringstem konstruktiven Mehraufwand verbunden.

Als Messmotor ist es insbesondere bevorzugt, einen Synchronmotor einzusetzen, insbesondere einen dreiphasigen Synchronmotor, der an eine Drehstromversorgung eines Linearmotors angeschlossen werden kann. Grundsätzlich kann für das erfindungsgemäße Verfahren auch ein Reluktanzmotor eingesetzt werden, insbesondere dann, wenn ein Wegfahren aus einer Geschwindigkeit ungleich von 0 gewünscht ist und folglich dann ein Anlaufen des Synchronmotors nicht sichergestellt werden kann. In diesem Fall wird zwar während des Anlaufens ein Asynchronmotor-Verhalten mit daraus gegebenenfalls resultierender Messverfälschung auftreten, im Bereich der Synchrondrehzahl des Reluktanzmotors dann aber synchrones Verhalten stattfinden, wie bei Synchronmotoren.

In weniger anspruchsvollen Anwendungsfällen kann für den Messmotor auch ein Asynchronmotor eingesetzt werden, soweit eine Konstanz der Spannungen im Messsystem sichergestellt werden kann. In diesem Fall ist das Schlupfverhalten des Asynchronmotors in die Berechnung der Geschwindigkeit des Fahrzeugs einzubeziehen, indem beispielsweise mittels eines entsprechenden Proportionalfaktors die Geschwindigkeit des Drehsensors korrigiert wird.

Gemäß einer ersten bevorzugten Ausführungsform wird in den Linearstatoren durch Induktion mit dem Magneten des Fahrzeugs ein Strom erzeugt und an den Stator des Messmotors geleitet.

Weiterhin ist es bevorzugt, wenn die Linearstatoren und der Stator des Messmotors mittels eines Frequenzumrichters mit einer Wechselspannung versorgt werden, die ein wanderndes Magnetfeld entlang der Reihe der Linearstatoren erzeugt. Auf diese Weise können Antrieb und Messverfahren in zuverlässiger und konstruktiv einfacher Weise miteinander verschaltet werden und zugleich durch den Frequenzumrichter eine Regelung der Geschwindigkeit des Fahrzeugs erfolgen.

Weiterhin ist es bevorzugt, wenn die Linearstatoren zu Linearstatorgruppen zusammengefasst sind und in der Reihe der Linearstatoren alternierend jeweils ein Linearstator aus jeder der Linearstatorgruppen hintereinander angeordnet sind. Bei dieser Anordnung können beispielsweise zwei Linearstatorgruppen mit entsprechend zwei Statorgruppen des Messmotors elektrisch gekoppelt werden und die Linearstatoren der beiden Gruppen jeweils alternierend entlang des Fahrwegs angeordnet werden und in entsprechender Weise die Statorwicklungen des Messmotors um 180° versetzt zueinander angeordnet sein.

Dabei ist es insbesondere bevorzugt, wenn jeweils drei hintereinander angeordnete Linearstatoren jeweils einen Linearstator aus jeder von drei Linearstatorgruppen umfassen, die drei Linearstatoren zu einem Unterabschnitt zusammengefasst sind und über eine Schalteinheit mit jeweils einer von drei Phasenleitungen verbunden ist, von denen zumindest eine, vorzugsweise alle drei, elektrisch mit dem Messmotor gekoppelt ist/ sind. So können in dieser Anwendung die Linearstatoren in mehreren, unmittelbar hintereinander angeordneten Abschnitten entlang des Fahrwegs angeordnet sein, wobei in jedem Abschnitt drei Linearstatoren angeordnet sind und die jeweils ersten Linearstatoren in diesen Abschnitten miteinander zu einer Gruppe von Linearstatoren zusammengefasst sind, die mit einer Statorwicklung oder einer Gruppe von Statorwicklungen in gleicher Phase des Messmotors elektrisch gekoppelt sind. In entsprechender Weise sind dann die jeweils zweiten und jeweils dritten Llnearstatoren der einzelnen Abschnitte zu einer zweiten und einer dritten Gruppe zusammengefasst und entsprechend mit einem Stator oder einer Gruppe von Statoren gleicher Phase des Messmotors elektrisch gekoppelt. In diesem Fall werden also drei Linearstatorgruppen a, b, c eingesetzt werden, die Linearstatoren entlang des Fahrwegs in der Anordnung a, b, c, a, b, c,... aneinandergereiht, und mit entsprechenden Statoren des Messmotors, oder einer entsprechenden Statorgruppenanordnung im Messmotor die um 120° versetzt sind, elektrisch gekoppelt.

Gemäß einer weiteren bevorzugten Ausführungsform wird die Position des Fahrzeugs bestimmt, indem der Durchlauf einer bestimmten Position der Fahrstrecke mittels eines Positionssensors, insbesondere eines Näherungsschalters wie einer Lichtschranke erfasst wird, das Positionssensorssignal an die Auswerteeinheit übermittelt wird und aus dem Drehsensorsignal und dem Positionssensorssignal die Position des Fahrzeugs bestimmt wird. Durch diese Fortbildung kann aus der Geschwindigkeitsmessung des erfindungsgemäßen Verfahrens, welche lediglich eine relative Ortsänderung erfassen kann, eine absolute Ortsbestimmung des Fahrzeugs entlang des gesamten, von Linearstatoren erfassten Messbereichs erfolgen, indem die Fahrzeugposition zu einem einmaligen Zeitpunkt entlang der Fahrstrecke oder einem festen Ort der Fahrstrecke ermittelt wird und anschließend an diese Ortsbestimmung durch die Addition oder Subtraktion der aus dem erfindungsgemäßen Messverfahren ermittelten relativen Ortsänderung der absolute Ort des Fahrzeugs zu jedem Zeitpunkt der Fahrt innerhalb des gesamten Messbereichs berechnet werden kann. Hierzu muss in bekannter Weise lediglich die ermittelte Geschwindigkeit über die Zeit integriert werden bzw. eine unmittelbare Berechnung des Streckenversatzes aus den Drehsensorsignalen erfolgen. Zusätzlich kann für diese Ortsbestimmung mit dem Positionssensor ein gesonderter Positionssensor verwendet werden, wie beispielsweise eine Lichtschranke oder ein Kontaktschalter. Es kann jedoch auch ein separat verschalteter Linearstator eingesetzt werden, der bei Überfahrt durch den Magneten erregt wird und hierdurch das gewünschte absolute Ortssignal an die Auswerteeinheit sendet.

Gemäß eines weiteren Aspekts der Erfindung wird ein Verfahren zum gesicherten Betreiben zumindest eines Fahrzeugs eines Fahrgeschäfts bereitgestellt, mit den Schritten: Bereitstellen einer Vielzahl von entlang zumindest eines Abschnitts der Fahrstrecke des Fahrzeugs in Reihe befestigten Linearstatoren, Bereitstellen eines am Fahrzeug befestigten Magneten solcherart, dass er bei Bewegen des Fahrzeugs entlang des Abschnitts der Fahrstrecke mit den Linearstatoren zusammenwirkt. Regeln der Frequenz einer elektrischen Wechselspannung in einem Frequenzumrichter, Versorgen der einzelnen Linearstatoren mit der elektrischen Wechselspannung solcherart, dass entlang der Reihe ein Wandermagnetfeld erzeugt wird, welches auf den am Fahrzeug befestigten Magneten eine Antriebskraft ausübt, Versorgen eines Messmotors, wie eines Drehsynchronmotors, mit derselben elektrischen Wechselspannung, Antreiben eines Drehsensors mit dem Messmotor, Erzeugen eines zur Drehgeschwindigkeit des Drehsensors korrelierenden Drehsensorsignals und Zuführen des Drehsensorsignals zu einer Auswerteeinheit, Ermitteln der Drehgeschwindigkeit des Drehsensors aus dem Drehsensorsignal und der Geschwindigkeit des Fahrzeugs aus der Drehgeschwindigkeit des Drehsensors, Vergleichen der Geschwindigkeit des Fahrzeugs mit einer vorbestimmten Soll- oder Maximalgeschwindigkeit, und Ändern der im Frequenzumrichter geregelten Frequenz oder der Versorgung der Linearstatoren, wenn von der Sollgeschwindigkeit abgewichen bzw. die Maximalgeschwindigkeit überschritten wird.

Mit diesem Verfahren wird ein Betrieb eines Fahrgeschäfts ermöglicht, bei dem auf sichere Weise die Abweichung oder Überschreitung von Soll- bzw. Maximalgeschwindigkeiten verhindert werden kann, indem mittels des zuvor erläuterten erfindungsgemäßen Messverfahrens die Fahrzeuggeschwindigkeit erfasst wird und das Fahrzeuggeschwindigkeitssignal für den Abgleich mit einer Soll- oder Maximalgeschwindigkeit und die Regelung der Fahrgeschwindigkeit verwendet wird.

Dabei kann das Betriebsverfahren für das Fahrgeschäft insbesondere nach einer der vorangegangenen Fortbildungsformen des erfindungsgemäßen Messverfahrens fortgebildet werden.

Ein weiterer Aspekt der Erfindung ist eine Vorrichtung zum Messen der Geschwindigkeit eines Fahrzeuges eines Fahrgeschäfts, umfassend: einen elektrischen Messmotor, dessen Statoren mit einer Vielzahl von entlang zumindest eines Abschnitts der Fahrstrecke des Fahrzeugs in Reihe befestigten Linearstatoren elektrisch koppelbar sind, einen mit dem Messmotor drehmomentstarr gekoppelten Drehsensor, eine Auswerteeinheit mit einem Zeittaktgeber, welche mit dem Drehsensor zum Empfangen des Drehsensorsignals verbunden ist und eine Berechnungseinheit umfasst, die ausgebildet ist, um aus dem Drehsensorsignal und dem vom Zeittaktgeber erhaltenen Zeittakt die Drehgeschwindigkeit des Messmotors und hieraus die Geschwindigkeit des Fahrzeugs zu ermitteln.

Die erfindungsgemäße Messvorrichtung eignet sich insbesondere dazu, das erfindungsgemäße Messverfahren durchzuführen. Als Messmotor eignet sich dabei, wie zuvor erläutert, insbesondere ein Synchron- oder Reluktanzmotor, aber auch ein Asynchronmotor. Die Auswerteeinheit umfasst vorzugsweise einen Speicher, in dem die für die Ermittlung der Fahrzeuggeschwindigkeit aus dem Drehsensorsignal und dem von Zeittaktgeber vorgegebenen Zeittakt erforderlichen geometrischen Daten abgelegt und zugreifbar sind, wie beispielsweise die Anzahl der Phasen, der Abstand zwischen den Linearstatoren entlang der Fahrstrecke des Fahrzeugs und die Anzahl der Pole des Rotors des Messmotors.

Die erfindungsgemäße Vorrichtung kann fortgebildet werden durch einen Frequenzumrichter zum Erzeugen und gegebenenfalls Frequenzregeln einer Wechselspannung, der mit den Linearstatoren solcherart elektrisch gekoppelt ist, dass er ein wanderndes Magnetfeld entlang der Reihe der Linearstatoren erzeugt. Auf diese Weise kann mittels des wandernden Magnetfelds das Fahrzeug angetrieben oder abgebremst werden und zugleich durch direkte elektrische Ankopplung der Statoren des Messmotors an den Frequenzumrichter die aktuelle Geschwindigkeit des Fahrzeugs ermittelt werden. Dabei ist es insbesondere bevorzugt, wenn der Frequenzumrichter eine dreiphasige Drehstromversorgung an drei gleichphasig geschaltete Gruppen von Linearstatoren bereitstellt und der Messmotor in entsprechender Weise ein dreiphasiger Drehstrom-Synchronmotor ist.

Weiterhin ist es bevorzugt, wenn die Linearstatoren zu Linearstatorgruppen zusammengefasst sind und in der Reihe der Linearstatoren alternierend jeweils ein Linearstator aus jeder der Linearstatorgruppen hintereinander angeordnet ist.

Dabei ist es insbesondere vorteilhaft, wenn jeweils drei hintereinander angeordnete Linearstatoren jeweils einen Linearstator aus jeder von drei Linearstatorgruppen umfassen, zu einem Unterabschnitt zusammengefasst sind und über eine Schalteinheit mit drei Phasenleitungen verbunden sind, von denen zumindest eine, vorzugsweise alle drei elektrisch mit dem Messmotor gekoppelt ist/sind.

Gemäß einer weiteren bevorzugten Ausführungsform der erfindungsgemäßen Vorrichtung wird ein Positionssensor, insbesondere ein Näherungsschalter wie eine Lichtschranke, welcher an einer Position des Fahrwegs des Fahrzeugs angeordnet und mit der Auswerteeinheit verbunden ist zur Übermittlung eines Positionssignals an die Auswerteeinheit bei Durchlauf des Fahrzeugs durch die Position, vorgesehen, wobei die Auswerteeinheit ausgebildet ist, um die Position des Fahrzeugs aus dem Drehsensorsignal und dem Positionssensorssignal zu bestimmen. Mit dieser Fortbildung der erfindungsgemäßen Vorrichtung wird auch eine absolute Positionsbestimmung des Fahrzeugs entlang des von den Linearstatoren abgedeckten Fahrstreckenbereichs ermöglicht. Zu Details und Vorteilen dieser Ausführungsform der erfindungsgemäßen Vorrichtung wird insbesondere auf das entsprechende, zuvor erläuterte erfindungsgemäße Verfahren mit absoluter Positionsbestimmung verwiesen.

Schließlich ist ein weiterer Aspekt der Erfindung eine Vorrichtung zum gesicherten Betreiben von zumindest einem Fahrzeug eines Fahrgeschäfts, umfassend: eine Vielzahl von entlang zumindest eines Abschnitts der Fahrstrecke des Fahrzeugs in Reihe befestigten Linearstatoren, einen am Fahrzeug befestigten Magneten, der so angeordnet ist, dass er bei Bewegen des Fahrzeugs entlang des Abschnitts der Fahrstrecke mit den Linearstatoren zusammenwirkt, einen Frequenzumrichter zum Erzeugen und gegebenenfalls Regeln einer Frequenz einer elektrischen Wechselspannung, eine elektrische Verbindung zum Verbinden der einzelnen Linearstatoren oder Linearstatorgruppen mit dem Frequenzumrichter solcherart, dass durch die elektrische Wechselspannung entlang der Reihe ein Wandermagnetfeld erzeugt wird, welches auf den am Fahrzeug befestigten Magneten eine Antriebskraft ausübt, einen Messmotor, wie einen Drehsynchronmotor oder Drehasynchronmotor, dessen Stator mit dem Frequenzumrichter solcherart verbunden ist, dass durch die elektrische Wechselspannung ein Drehfeld im Messmotor erzeugt wird, welches einen Rotor des Messmotors antreibt, einen mit dem Rotor des Messmotors gekoppelten Drehsensor, eine Auswerteeinheit, welche mit dem Drehsensor verbunden ist zum Zuführen des Drehsensorsignals, und welche ausgebildet ist, um aus dem Drehsensorsignal die Drehgeschwindigkeit des Drehsensors bzw. Rotors und hieraus die Geschwindigkeit des Fahrzeugs zu ermitteln, und die Geschwindigkeit des Fahrzeugs mit einer vorbestimmten Soll- oder Maximalgeschwindigkeit zu vergleichen, eine Verbindung zwischen Überwachungsvorrichtung und Frequenzumrichter zum Übertragen eines Regel- oder Steuersignals an den Frequenzumrichter zum Regeln der Frequenz oder Versorgung der Linearstatoren, wenn von der Sollgeschwindigkeit abgewichen bzw. Abschalten der Versorgung der Statoren, wenn die Maximalgeschwindigkeit überschritten wird. Mit dieser Vorrichtung wird der gesicherte, witterungsunabhängige Betrieb eines Fahrgeschäfts ermöglicht. Zu Details und Vorteilen dieser Vorrichtung wird insbesondere auf das zuvor erläuterte entsprechende Verfahren zum Betreiben eines Fahrgeschäfts verwiesen.

Die zuvor erläuterte Vorrichtung kann insbesondere fortgebildet werden, indem eines oder mehrere Merkmale der zuvor erläuterten Messvorrichtung zur Geschwindigkeitsbestimmung an Fahrzeugen vorgesehen sind.

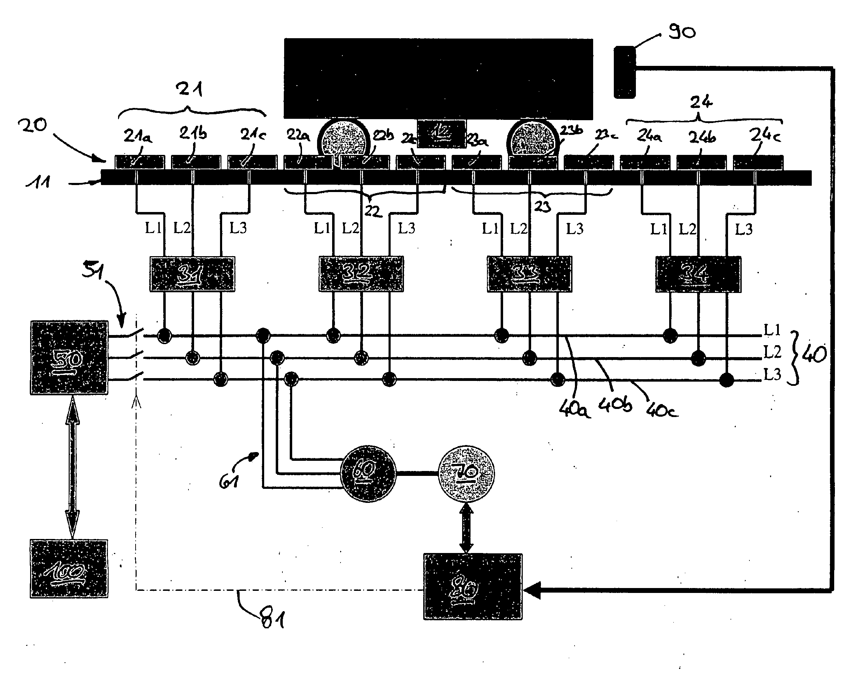

Eine bevorzugte Ausführungsform wird anhand der beiliegenden Figur erläutert.

Die Figur zeigt eine schematisierte Anordnung und Verschaltung einer erfindungsgemäßen Messanordnung zur Durchführung des erfindungsgemäßen Messverfahrens.

Ein Fahrzeug 10 bewegt sich entlang einer durch eine Schiene 11 definierten Fahrstrecke. Am Boden des Fahrzeugs 10 ist ein Permanentmagnet 12 angeordnet, der fest mit dem Fahrzeug verbunden ist und durch die Führung des Fahrzeugs in einem definierten Abstand oberhalb einer Reihe von Linearstatoren 20 entlanggeführt wird.

Die Linearstatoren 20 sind entlang des Gleises 11 in gleichmäßigem Abstand voneinander angeordnet. Die Linearstatoren 20 sind in dem dargestellten Ausschnitt der Fahrstrecke in vier Abschnitte 21-24 aufgeteilt, die hintereinander in Reihe angeordnet sind. Jeder der vier Abschnitte 21-24 umfasst jeweils drei Linearstatoren.

Jeweils drei Linearstatoren 21a-c, 22a-c, 23a-c, 24a-c sind über jeweils eine jedem Abschnitt 21-24 zugeordnete Schaltereinheit 31-34 mit jeweils einer Phase 40a-c einer dreiphasigen Versorgungsleitung 40 verbunden.

Die dreiphasige Versorgungsleitung 40 wird durch einen Frequenzumrichter 50 gespeist, der mittels einer Dreifachschaltereinheit 51 mit den drei Phasenleitungen 40a, b, c der dreiphasigen Versorgungsleitung 40 gekoppelt werden kann.

Der jeweils erste Linearstator 21a-24a eines Abschnitts 21-24 ist über die jeweilige Schaltereinheit 31-34 mit der ersten Phase 40a der dreiphasigen Versorgungsleitung 40 elektrisch gekoppelt. In entsprechender Weise ist der jeweils zweite Linearstator 21b-24b und der jeweils dritte Linearstator 21c-24c der Abschnitte 21-24 über die entsprechenden Schaltereinheiten 31-34 mit der zweiten Phase 40a bzw. der dritten Phase 40c der Versorgungsleitung 40 elektrisch gekoppelt.

Die solcherart bereitgestellte Verschaltung der Linearstatoren über die Schaltereinheiten und die Versorgung der Versorgungsleitung 40 über den Frequenzumrichter 50 stellt einen Linearantrieb des Fahrzeugs 10 über ein mit dem Magneten 12 zusammenwirkendes Wandermagnetfeld dar, wenn die Schaltereinheit 51 geschlossen ist. Die Geschwindigkeit des Wandermagnetfeldes und damit des Fahrzeugs kann durch die Frequenzregelung im Frequenzumrichter 50 beeinflusst werden.

Ein Rotationsmotor 60, der hier als Drehstromsynchronrotationsmotor ausgebildet ist, ist über eine dreiphasige Messleitung 61 mit den drei Phasen der Versorgungsleitung 40 elektrisch gekoppelt. Der Synchronmotor 60 wird hierdurch bei geschlossener Schaltereinheit 50 in gleicher Weise durch den Frequenzumrichter 50 mit einem dreiphasigen Drehstrom versorgt und hierdurch in Abhängigkeit der Frequenz auf eine bestimmte Drehzahl gebracht. Bei geöffneter Schaltereinheit 51 wird der Synchronmotor 60 durch induktiv in den Linearstatoren bei Überfahrt durch den Magneten 12 erzeugten Strom angetrieben und hierdurch in eine Rotation versetzt, die synchron zur Bewegung des Fahrzeugs ist und deren Rotationsgeschwindigkeit proportional zur Fahrgeschwindigkeit des Fahrzeugs 10 ist.

Der Synchronmotor 60 ist mit einem Drehsensor 70 drehmomentstarr gekoppelt, so dass die Rotation des Rotors des Synchronmotors 60 auf den Drehsensor 70 übertragen wird.

Der Drehsensor 70 erzeugt ein Drehsensorsignal, welches an eine Positions/Geschwindigkeitsauswerteeinheit 80 übertragen wird.

In der Auswerteeinheit 80 sind geometrisch relevante Daten der dargestellten Messanordnung gespeichert. Insbesondere ist der Abstand der Linearstatoren voneinander, also die sogenannte Teilung des Linearstators, die Anzahl der Polpaare des Synchronmotors und die Anzahl der Impulse, welche das Drehsensorsignal pro Umdrehung erzeugt, gespeichert. Die Auswerteeinheit 80 umfasst weiterhin einen Zeittaktgeber, welcher den Zeittakt zur Geschwindigkeitsermittlung bereitstellt.

In der Auswerteeinheit kann somit die Geschwindigkeit des Fahrzeugs bzw. des vom Frequenzumrichter entlang der Linearstatoren 21 a, b, c-24a, b, c erzeugten Wandermagnetfelds somit nach der Formel

$$v = (j \times p \times t) / J$$

ermittelt werden, worin

v = Geschwindigkeit des Wandermagnetfelds bzw. Fahrzeugs 10,

j = Anzahl der Impulse des Drehsensors 70 pro Sekunde,

p = Polpaare des Synchronmotors 60,

t = Teilung des Linearstators 20, und

J = Anzahl der Impulse des Drehsensors pro Umdrehung

ist.

Die Auswerteeinheit 80 ist weiterhin mit einer Lichtschranke 90 verbunden, welche die Durchfahrt des Fahrzeugs 10 an einer bestimmten Position entlang der Fahrstrecke erfassen kann. Auf diese Weise erhält die Auswerteeinheit 80 von der Lichtschranke 90 ein absolutes Positionssignal und kann durch Addition bzw. Subtraktion der durch Integration der Fahrgeschwindigkeit über die Zeit berechneten Fahrstrecke des Fahrzeugs die aktuelle, absolute Position des Fahrzeugs ermitteln.

Die Auswerteeinheit 80 ist über eine Sicherheitsleitung 81 mit der Schaltereinheit 51 gekoppelt. Die Auswerteeinheit 80 vergleicht die ermittelte Geschwindigkeit der Fahrzeugs 10 mit einer Maximalgeschwindigkeit. Bei Überschreitung der Maximalgeschwindigkeit wird über die Sicherheitsleitung 81 die Schaltereinheit 51 geöffnet und hierdurch die Versorgungsleitung 40 nicht weiter aus dem Frequenzumrichter 50 mit einem Drehstrom versorgt. Hierdurch wird die Antriebsleistung auf 0 herabgesetzt und folglich eine Geschwindigkeitsverminderung des Fahrzeugs herbeigeführt, um die Geschwindigkeit unter die Maximalgeschwindigkeit zu reduzieren.

Der Frequenzumrichter 50 ist seinerseits mit einer Fahrzeugsteuerungseinrichtung 100 gekoppelt, über welche bestimmte Fahrprogramme mit Beschleunigungs- und Verzögerungsphasen ablaufen können.

## Patentansprüche

1. Verfahren zum Messen der Geschwindigkeit eines Fahrzeugs (10), insbesondere Fahrzeugen eines Fahrgeschäfts, mit den Schritten:

   a. Bereitstellen einer Vielzahl von entlang zumindest eines Abschnitts der Fahrstrecke des Fahrzeugs in Reihe befestigten Linearstatoren (20),
   b. Bereitstellen eines am Fahrzeug befestigten Magneten (12) solcherart, dass er bei Bewegen des Fahrzeugs entlang des Abschnitts der Fahrstrecke mit den Linearstatoren zusammenwirkt
   c. Elektrisches Koppeln der einzelnen Linearstatoren mit dem Stator eines Messmotors (60), wie eines Drehsynchronmotors,
   d. Antreiben eines Drehsensors (70) mit dem Messmotor.
   e. Erzeugen eines zur Drehgeschwindigkeit des Drehsensors korrelierenden Drehsensorsignals und
   f. Ermitteln der Geschwindigkeit des Fahrzeugs aus dem Drehsensorsignal in einer Auswerteeinheit (80).

2. Verfahren nach Anspruch 1,
   **dadurch gekennzeichnet, dass** in den Linearstatoren (20) durch Induktion mit dem Magneten (12) des Fahrzeugs (10) ein Strom erzeugt wird und an den Stator des Messmotors (60) geleitet wird.

3. Verfahren nach Anspruch 1,
   **dadurch gekennzeichnet, dass** die Linearstatoren und der Stator des Messmotors mittels eines Frequenzumrichters (50) mit einer Wechselspannung versorgt werden, die ein wanderndes Magnetfeld entlang der Reihe der Linearstatoren erzeugt.

4. Verfahren nach einem der vorhergehenden Ansprüche,
   **dadurch gekennzeichnet, dass** die Linearstatoren zu Linearstatorgruppen (21 a-24a; 21 b-24b; 21 c-24c) zusammengefasst sind und in der Reihe der Linearstatoren alternierend jeweils ein Linearstator aus jeder der Linearstatorgruppen hintereinander angeordnet sind.

5. Verfahren nach dem vorhergehenden Anspruch,
   **dadurch gekennzeichnet, dass** jeweils drei hintereinander angeordnete Linearstatoren (21a-c; 22a-c; 23a-c; 24a-c) jeweils einen Linearstator aus jeder von drei Linearstatorgruppen umfassen, die drei Linearstatoren zu einem Unterabschnitt (21-24) zusammengefasst sind und über eine Schalteinheit (31; 32; 33; 34) mit jeweils einer von drei Phasenleitungen verbunden ist, von denen zumindest eine, vorzugsweise alle drei, elektrisch mit dem Messmotor gekoppelt ist/sind.

6. Verfahren nach einem der vorhergehenden Ansprüche,
   **dadurch gekennzeichnet, dass** die Position des Fahrzeugs bestimmt wird, indem der Durchlauf einer bestimmten Position der Fahrstrecke mittels eines Positionssensors (90), insbesondere eines Näherungsschalters wie einer Lichtschranke erfasst wird, das Positionssensorssignal an die Auswerteeinheit (80) übermittelt wird und aus dem Drehsensorsignal und dem Positionssensorssignal die Position des Fahrzeugs bestimmt wird.

7. Verfahren zum gesicherten Betreiben zumindest eines Fahrzeugs eines Fahrgeschäfts, mit den Schritten:

   a. Bereitstellen einer Vielzahl von entlang zumindest eines Abschnitts der Fahrstrecke des Fahrzeugs in Reihe befestigten Linearstatoren (20),
   b. Bereitstellen eines am Fahrzeug befestigten Magneten (12) solcherart, dass er bei Bewegen des Fahrzeugs entlang des Abschnitts der Fahrstrecke mit den Linearstatoren zusammenwirkt,
   c. Regeln der Frequenz einer elektrischen Wechselspannung in einem Frequenzumrichter (50),
   d. Versorgen der einzelnen Linearstatoren mit der elektrischen Wechselspannung solcherart, dass entlang der Reihe ein Wandermagnetfeld erzeugt wird, welches auf den am Fahrzeug befestigten Magneten eine Antriebskraft ausübt,

e. Versorgen eines Messmotors (60), wie eines Drehsynchronmotors, mit derselben elektrischen Wechselspannung,

f. Antreiben eines Drehsensors (70) mit dem Messmotor,

g. Erzeugen eines zur Drehgeschwindigkeit des Drehsensors korrelierenden Drehsensorsignals und

h. Zuführen des Drehsensorsignals zu einer Auswerteeinheit (80),

i. Ermitteln der Drehgeschwindigkeit des Drehsensors aus dem Drehsensorsignal und der Geschwindigkeit des Fahrzeugs aus der Drehgeschwindigkeit des Drehsensors,

j. Vergleichen der Geschwindigkeit des Fahrzeugs mit einer vorbestimmten Soll- oder Maximalgeschwindigkeit, und

k. Ändern der im Frequenzumrichter geregelten Frequenz oder der Versorgung der Linearstatoren, wenn von der Sollgeschwindigkeit abgewichen bzw. die Maximalgeschwindigkeit überschritten wird.

8. Verfahren nach dem vorhergehenden Anspruch, **gekennzeichnet durch** eines der Merkmale zumindest eines der Ansprüche 1-7.

9. Vorrichtung zum Messen der Geschwindigkeit eines Fahrzeugs (10) eines Fahrgeschäfts, umfassend:

a. einen elektrischen Messmotor (60), dessen Stator mit einer Vielzahl von entlang zumindest eines Abschnitts der Fahrstrecke des Fahrzeugs in Reihe befestigten Linearstatoren (20) elektrisch koppelbar ist,

b. einen mit dem Messmotor drehmomentstarr gekoppelten Drehsensor (70),

c. eine Auswerteeinheit (80) mit einem Zeittaktgeber, welche mit dem Drehsensor zum Empfangen des Drehsensorsignals verbunden ist und eine Berechnungseinheit umfasst, die ausgebildet ist, um aus dem Drehsensorsignal und dem vom Zeittaktgeber erhaltenen Zeittakt die Drehgeschwindigkeit des Messmotors und hieraus die Geschwindigkeit des Fahrzeugs zu ermitteln.

10. Vorrichtung nach Anspruch 9, **gekennzeichnet durch** einen Frequenzumrichter (50) zum Erzeugen und gegebenfalls Frequenzregeln einer Wechselspannung, der mit den Linearstatoren solcherart elektrisch gekoppelt ist, dass er ein wanderndes Magnetfeld entlang der Reihe der Linearstatoren erzeugt.

11. Vorrichtung nach einem der vorhergehenden Ansprüche 9-10, **dadurch gekennzeichnet, dass** die Linearstatoren zu Linearstatorgruppen (21a-24a; 21 b-24b; 21c-24c) zusammengefasst sind und in der Reihe der Linearstatoren alternierend jeweils ein Linearstator aus jeder der Linearstatorgruppen hintereinander angeordnet ist.

12. Vorrichtung nach dem vorhergehenden Anspruch, **dadurch gekennzeichnet, dass** jeweils drei hintereinander angeordnete Linearstatoren jeweils einen Linearstator aus jeder von drei Linearstatorgruppen umfassen, zu einem Unterabschnitt (21-24) zusammengefasst sind und über eine Schalteinheit (31-34) mit drei Phasenleitungen (40a-c) verbundensind, von denen zumindest eine, vorzugsweise alle drei elektrisch mit dem Messmotor gekoppelt ist/sind.

13. Vorrichtung nach einem der vorhergehenden Ansprüche 9-12, **gekennzeichnet durch** einen Positionssensor (80), insbesondere einen Näherungsschalter wie einer Lichtschranke, welche an einer Position des Fahrwegs des Fahrzeugs angeordnet und mit der Auswerteeinheit verbunden ist zur Übermittlung eines Positionssignals an die Auswerteeinheit bei Durchlauf des Fahrzeugs **durch** die Position, wobei die Auswerteeinheit ausgebildet ist, um die Position des Fahrzeugs aus dem Drehsensorsignal und dem Positionssensorssignal zu bestimmen.

14. Vorrichtung zum gesicherten Betreiben von zumindest einem Fahrzeug (10) eines Fahrgeschäfts, umfassend:

a. eine Vielzahl von entlang zumindest eines Abschnitts der Fahrstrecke des Fahrzeugs in Reihe befestigten Linearstatoren (20),

b. einen am Fahrzeug befestigten Magneten (12), der so angeordnet ist, dass er bei Bewegen des Fahrzeugs entlang des Abschnitts der Fahrstrecke mit den Linearstatoren zusammenwirkt,

c. einen Frequenzumrichter (50) zum Erzeugen und gegebenenfalls Regeln einer Frequenz einer elektrischen Wechselspannung,

d. eine elektrische Verbindung (40) zum Verbinden der einzelnen Linearstatoren oder Linearstatorgruppen mit dem Frequenzumrichter solcherart, dass durch die elektrische Wechselspannung entlang der Reihe ein Wandermagnetfeld erzeugt wird, welches auf den am Fahrzeug befestigten Magneten eine Antriebskraft ausübt,

e. einen Messmotor (60), wie einen Drehsynchronmotor oder Drehasynchronmotor, dessen Stator mit dem Frequenzumrichter solcherart verbunden sind, dass durch die elektrische Wechselspannung ein Drehfeld im Messmotor erzeugt wird, welches einen Rotor des Messmotors antreibt,

f. einen mit dem Rotor des Messmotors gekoppelten Drehsensor (70),

g. eine Auswerteeinheit (80), welche mit dem Drehsensor verbunden ist zum Zuführen des Drehsensorsignals, und welche ausgebildet ist, um aus dem Drehsensorsignal die Drehgeschwindigkeit des Drehsensors bzw. Rotors und hieraus die Geschwindigkeit des Fahrzeugs zu ermitteln, und die Geschwindigkeit des Fahrzeugs mit einer vorbestimmten Soll- oder Maximalgeschwindigkeit zu vergleichen,

h. eine Verbindung (81) zwischen Überwachungsvorrichtung und Frequenzumrichter zum Übertragen eines Regelsignals an den Frequenzumrichter zum Regeln der Frequenz oder Versorgung der Linearstatoren, wenn von der Sollgeschwindigkeit abgewichen bzw. die Maximalgeschwindigkeit überschritten wird.

**15.** Vorrichtung nach dem vorhergehenden Anspruch, **gekennzeichnet durch** eines der Merkmale zumindest eines der Ansprüche 9-13.

**Claims**

**1.** A method for measuring the velocity of a vehicle (10), in particular vehicles of a fairground ride, with the steps:

 a. providing a plurality of linear stators (20) attached in a row along at least a section of the driving route of the vehicle,

 b. providing a magnet (12) attached to the vehicle in such a manner that it cooperates with the linear stators when the vehicle moves along the section of the driving route

 c. electrical coupling of the individual linear stators to the stator of an integrating motor (60), such as of a rotational synchronous motor,

 d. powering a rotational sensor (70) with the integrating motor,

 e. generating a rotational sensor signal which correlates to the rotational velocity of the rotational sensor and

 f. ascertaining the velocity of the vehicle from the rotational sensor signal in an evaluation unit (80).

**2.** The method according to Claim 1, **characterised in that** a current is generated in the linear stators (20) through induction with the magnet (12) of the vehicle (10) and is conducted to the stator of the integrating motor (60).

**3.** The method according to Claim 1,

**characterised in that** the linear stators and the stator of the integrating motor are supplied, by means of a frequency converter (50), with an alternating voltage, which generates a migrating magnetic field along the row of linear stators.

**4.** The method according to one of the preceding claims,

**characterised in that** the linear stators are combined into linear stator groups (21a-24a; 21b-24b; 21c-24c) and are arranged in the row of linear stators in an alternating manner in each case with one linear stator each from each of the linear stator groups behind one another.

**5.** The method according to the preceding claim, **characterised in that** each three linear stators (21 a-c; 22a-c; 23a-c; 24a-c) arranged behind one another respectively include one linear stator from each of three linear stator groups, the three linear stators being combined into a subsection (21-24) and being connected via a switch unit (31; 32; 33; 34) to a respective one of three phase lines, of which at least one, preferably all three, is/are electrically coupled to the integrating motor.

**6.** The method according to one of the preceding claims,

**characterised in that** the position of the vehicle is determined by detecting the traversing of a particular position of the driving route by means of a position sensor (90), in particular by means of a proximity switch such as a light barrier, the position sensor signal being transmitted to the evaluation unit (80) and the position of the vehicle being determined from the rotational sensor signal and the position sensor signal.

**7.** A method for the secure operation of at least one vehicle of a fairground ride, with the steps:

 a. providing a plurality of linear stators (20) attached in a row along at least a section of the driving route of the vehicle,

 b. providing a magnet (12) attached to the vehicle in such a manner that it cooperates with the linear stators when the vehicle moves along the section of the driving route

 c. regulating the frequency of an electrical alternating voltage in a frequency converter (50),

 d. supplying the individual linear stators with the electrical alternating voltage in such a manner that a migrating magnetic field, which exerts a propulsive force onto the magnet attached to the vehicle, is generated along the row,

 e. supplying an integrating motor (60), such as a rotational synchronous motor, with the same electrical alternating voltage,

f. powering a rotational sensor (70) with the integrating motor,

g. generating a rotational sensor signal which correlates to the rotational velocity of the rotational sensor and

h. feeding the rotational sensor signal to an evaluation unit (80),

i. ascertaining the rotational velocity of the rotational sensor from the rotational sensor signal and the velocity of the vehicle from the rotational velocity of the rotational sensor,

j. comparing the velocity of the vehicle with a predetermined target velocity or maximum velocity, and

k. changing the frequency regulated in the frequency converter or changing the supply to the linear stators, if there is deviation from the target velocity or if the maximum velocity is exceeded.

8. The method according to the preceding claim, **characterised by** one of the features of at least one of the Claims 1-7.

9. A device for measuring the velocity of a vehicle (10) of a fairground ride, including:

a. an electrical integrating motor (60), of which the stator can be electrically coupled to a plurality of linear stators (20) attached in a row along at least a section of the driving route of the vehicle,

b. a rotational sensor (70) coupled in a torsionally stiff manner to the integrating motor,

c. an evaluation unit (80) with a timer, which is connected to the rotational sensor to receive the rotational sensor signal and which includes a calculation unit, which is configured to ascertain, from the rotational sensor signal and the clock pulse obtained from the timer, the rotational velocity of the integrating motor and, from this, the velocity of the vehicle.

10. The device according to Claim 9, **characterised by** a frequency converter (50) for generating an alternating voltage and, if necessary, regulating the frequency of an alternating voltage and which is electrically coupled to the linear stators in such a manner that it generates a migrating magnetic field along the row of linear stators.

11. The device according to one of the preceding claims 9-10, **characterised in that** the linear stators are combined into linear stator groups (21 a-24a; 21 b-24b; 21 c-24c) and are arranged in the row of linear stators in an alternating manner in each case with one linear stator each from each of the linear stator groups behind one another.

12. The device according to the preceding claim, **characterised in that** each three linear stators arranged behind one another respectively include one linear stator from each of three linear stator groups, are combined into a subsection (21-24) and are connected via a switch unit (31-34) to three phase lines (40a-c), of which at least one, preferably all three, is/are electrically coupled to the integrating motor.

13. The device according to one of the preceding claims 9-12, **characterised by** a position sensor (80), in particular a proximity switch such as a light barrier, which is arranged at a position of the vehicle track of the vehicle and is connected to the evaluation unit in order to transmit a position signal to the evaluation unit when the vehicle traverses the position, said evaluation unit being configured to determine the position of the vehicle from the rotational sensor signal and the position sensor signal.

14. A device for the secure operation of at least one vehicle (10) of a fairground ride, including:

a. a plurality of linear stators (20) attached in a row along at least a section of the driving route of the vehicle,

b. a magnet (12) which is attached to the vehicle and which is arranged such that it cooperates with the linear stators when the vehicle moves along the section of the driving route,

c. a frequency converter (50) for generating and, if necessary, regulating a frequency of an electrical alternating voltage,

d. an electrical connection (40) for connecting the individual linear stators or linear stator groups to the frequency converter in such a manner that a migrating magnetic field, which exerts a propulsive force onto the magnet attached to the vehicle, is generated along the row by the electrical alternating voltage,

e. an integrating motor (60), such as a rotational synchronous motor or rotational asynchronous motor, of which the stator is connected to the frequency converter in such a manner that a rotating field which powers a rotor of the integrating motor is generated in the integrating motor by the electrical alternating voltage,

f. a rotational sensor (70) coupled to the rotor of the integrating motor,

g. an evaluation unit (80) which is connected to the rotational sensor in order to feed the rotational sensor signal, and which is configured to ascertain, from the rotational sensor signal, the rotational velocity of the rotational sensor or rotor, and from this the velocity of the vehicle, and to compare the velocity of the vehicle with a predetermined target velocity or maximum velocity,

h. a connection (81) between the monitoring device and frequency converter for transferring a regulating signal to the frequency converter in order to regulate the frequency or the supply to the linear stators, if there is deviation from the target velocity or if the maximum velocity is exceeded.

15. The device according to the preceding claim, **characterised by** one of the features of at least one of the Claims 9-13.


**Revendications**

1. Procédé pour mesurer la vitesse d'un véhicule (10), en particulier des véhicules d'un manège, comprenant les étapes consistant à :

   a) prévoir une pluralité de stators linéaires (20) fixés en série le long d'au moins un tronçon du parcours du véhicule,
   b) prévoir un aimant (12) fixé au véhicule de telle sorte qu'il coopère avec les stators linéaires lorsque le véhicule se déplace le long du tronçon du parcours,
   c) coupler électriquement les stators linéaires individuels avec le stator d'un moteur de mesure (60), tel qu'un moteur synchrone rotatif,
   d) entraîner un capteur rotatif (70) avec le moteur de mesure,
   e) générer un signal de capteur rotatif en corrélation avec la vitesse de rotation du capteur rotatif, et
   f) déterminer la vitesse du véhicule à partir du signal de capteur rotatif dans une unité d'évaluation (80).

2. Procédé selon la revendication 1, **caractérisé en ce que** dans les stators linéaires (20), un courant est généré par induction avec l'aimant (12) du véhicule et dirigé vers le stator du moteur de mesure (60).

3. Procédé selon la revendication 1, **caractérisé en ce que** les stators linéaires et le stator du moteur de mesure sont alimentés au moyen d'un convertisseur de fréquence (50) avec une tension alternative qui génère un champ magnétique progressif le long de la série des stators linéaires.

4. Procédé selon l'une quelconque des revendications précédentes, **caractérisé en ce que** les stators linéaires sont regroupés en groupes de stators linéaires (21a à 24a ; 21b à 24b ; 21c à 24c), et dans la série des stators linéaires, sont disposés successivement en alternant chaque fois un stator linéaire de chacun des groupes de stators linéaires.

5. Procédé selon l'une quelconque des revendications précédentes, **caractérisé en ce que** trois stators linéaires (21a-c ; 22a-c ; 23a-c ; 24a-c) disposés successivement comprennent respectivement un stator linéaire de chacun de trois groupes de stators linéaires, **en ce que** les stators linéaires sont regroupés en une sous-section (21 - 24) et reliés par l'intermédiaire d'une unité de commutation (31 ; 32 ; 33 ; 34) à respectivement l'une de trois lignes de phase, dont au moins une, de préférence les trois, est/sont couplée(s) électriquement au moteur de mesure.

6. Procédé selon l'une quelconque des revendications précédentes, **caractérisé en ce que** la position du véhicule est déterminée **en ce que** le passage par une position déterminée du parcours est détecté au moyen d'un capteur de position (90), en particulier d'un commutateur capacitif, tel qu'une barrière lumineuse, le signal de capteur de position est transmis à l'unité d'évaluation (80) et la position du véhicule est déterminée à partir du signal du capteur rotatif et du signal du capteur de position.

7. Procédé pour une exploitation sécurisée d'au moins un véhicule d'un manège, comprenant les étapes consistant à :

   a) prévoir une pluralité de stators linéaires (20) fixés en série le long d'au moins un tronçon du parcours du véhicule,
   b) prévoir un aimant (12) fixé au véhicule de telle sorte qu'il coopère avec les stators linéaires lorsque le véhicule se déplace le long du tronçon du parcours,
   c) régler la fréquence d'une tension alternative électrique dans un convertisseur de fréquence (50),
   d) alimenter les stators linéaires individuels avec la tension alternative électrique de telle sorte que, le long de la série, un champ magnétique progressif soit généré, lequel exerce une force d'entraînement sur l'aimant fixé au véhicule,
   e) alimenter un moteur de mesure (60), tel qu'un moteur synchrone rotatif, avec la même tension alternative électrique,
   f) entraîner un capteur rotatif (70) avec le moteur de mesure,
   g) générer un signal de capteur rotatif en corrélation avec la vitesse de rotation du capteur rotatif, et
   h) amener le signal de capteur rotatif à une unité d'évaluation (80),
   i) déterminer la vitesse de rotation du capteur rotatif à partir du signal de capteur rotatif et la vitesse du véhicule à partir de la vitesse de rotation du capteur rotatif,

j) comparer la vitesse du véhicule à une vitesse de consigne ou vitesse maximale prédéterminée, et

k) modifier la fréquence réglée dans le convertisseur de fréquence ou l'alimentation des stators linéaires lorsque l'on s'écarte de la vitesse de consigne ou lorsque la vitesse maximale est dépassée.

8. Procédé selon la revendication précédente, **caractérisé par** une des particularités d'au moins l'une des revendications 1 à 7.

9. Dispositif pour mesurer la vitesse d'un véhicule (10) d'un manège, comprenant :

a) un moteur de mesure électrique (60) dont le stator peut être couplé électriquement avec une pluralité de stators linéaires (20) fixés en série le long d'au moins un tronçon du parcours du véhicule,

b) un capteur rotatif (70) couplé au moteur de mesure en fonction du couple de rotation,

c) une unité d'évaluation (80) avec un générateur d'impulsion d'horloge, qui est reliée au capteur rotatif pour recevoir le signal de capteur rotatif et comprend une unité de calcul qui est agencée pour déterminer, à partir du signal de capteur rotatif et de l'impulsion d'horloge obtenue à partir du générateur d'impulsion d'horloge, la vitesse de rotation du moteur de mesure et à partir de celle-ci la vitesse du véhicule.

10. Dispositif selon la revendication 9, **caractérisé par** un convertisseur de fréquence (50) pour générer et éventuellement régler en fréquence une tension alternative, ledit convertisseur étant électriquement couplé aux stators linéaires de telle sorte qu'il génère un champ magnétique progressif le long de la série des stators linéaires.

11. Dispositif selon l'une quelconque des revendications 9 et 10, **caractérisé en ce que** les stators linéaires sont regroupés en groupes de stators linéaires (21a à 24a ; 21b à 24b ; 21c à 24c), et dans la série des stators linéaires, sont disposés successivement en alternant chaque fois un stator linéaire de chacun des groupes de stators linéaires.

12. Dispositif selon la revendication précédente, **caractérisé en ce que** trois stators linéaires disposés successivement comprennent respectivement un stator linéaire provenant de chacun de trois groupes de stators linéaires, **en ce qu'**ils sont regroupés en une sous-section (21 à 24) et reliés par l'intermédiaire d'une unité de commutation (31 à 34) à trois lignes de phase (40a à c) dont au moins une, de préférence les trois, est/sont couplée(s) électriquement au moteur de mesure.

13. Dispositif selon l'une quelconque des revendications 9 à 12, **caractérisé par** un capteur de position (80), en particulier par un commutateur capacitif, tel qu'une barrière lumineuse, qui est disposé à une position du parcours du véhicule et relié à l'unité d'évaluation pour transmettre un signal de position à l'unité d'évaluation lorsque le véhicule passe par la position, dans lequel l'unité d'évaluation est agencée pour déterminer la position du véhicule à partir du signal du capteur rotatif et du signal du capteur de position.

14. Dispositif pour l'exploitation sécurisée d'au moins un véhicule (10) d'un manège, comprenant :

a) une pluralité de stators linéaires (20) fixés en série le long d'au moins un tronçon du parcours du véhicule,

b) un aimant (12) fixé au véhicule, qui est disposé de telle sorte qu'il coopère avec les stators linéaires lorsque le véhicule se déplace le long du tronçon du parcours,

c) un convertisseur de fréquence (50) pour générer et éventuellement régler une fréquence d'une tension alternative électrique,

d) une connexion électrique (40) pour connecter les stators linéaires individuels ou les groupes de stators linéaires au convertisseur de fréquence de telle sorte que la tension alternative électrique génère un champ magnétique progressif le long de la série qui exerce une force d'entraînement sur l'aimant fixé au véhicule,

e) un moteur de mesure (60), tel qu'un moteur synchrone rotatif ou un moteur asynchrone rotatif, dont le stator est connecté au convertisseur de fréquence de telle sorte que la tension alternative électrique génère un champ rotatif dans le moteur de mesure qui entraîne un rotor du moteur de mesure,

f) un capteur rotatif (70) couplé avec le rotor du moteur de mesure,

g) une unité d'évaluation (80) qui est connectée au capteur rotatif pour amener le signal de capteur rotatif, et qui est agencée pour déterminer à partir du signal de capteur rotatif la vitesse de rotation du capteur rotatif ou du rotor et à partir de celle-ci la vitesse du véhicule, et pour comparer la vitesse du véhicule à une vitesse de consigne ou maximale prédéterminée,

h) une connexion (81) entre le dispositif de surveillance et le convertisseur de fréquence pour transmettre un signal de réglage au convertisseur de fréquence de manière à régler la fréquence ou l'alimentation des stators linéaires lorsque l'on s'écarte de la vitesse de consigne ou lorsque la vitesse maximale est dépassée.

15. Dispositif selon la revendication précédente, **caractérisé par** une des particularités d'au moins l'une des revendications 9 à 13.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9317344 A
- DE 3433149
- US 4991514 A